# EUROPEAN PATENT APPLICATION

(11) **EP 1 767 501 A1**
(43) Date of publication of application: **28.03.2007**
(21) Application number: 05728818.5
(22) Date of filing: 05.04.2005
(51) Int. Cl.: C03B 18/04

(54) **STRUCTURE, FLOAT SHEET GLASS MANUFACTURING APPARATUS, BUBBLE FLOATING SUPPRESSING METHOD, AND FLOAT SHEET GLASS MANUFACTURING METHOD**

(30) Priority: 07.04.2004 JP 2004113542
(71) Applicant: ASAHI GLASS COMPANY LTD., Tokyo 100-8405 (JP)
(72) Inventor: INOUEI, Atsushi, c/o Asahi Glass Company, Limited, Yokohama-shi, Kanagawa2300045 (JP); TAKIGUCHI, Tetsushi, Asahi Glass Company, Limited, Yokohama-shi, Kanagawa 2300045 (JP); KAMIHORI, Toru, c/o Asahi Glass Company, Limited, Yokohama-shi, Kanagawa 2300045 (JP); BAN, Nobuyuki, c/o Asahi Glass Company, Limited, Yokohama-shi, Kanagawa 2300045 (JP)
(74) Representative: Müller-Boré & Partner Patentanwälte
(86) International application number: PCT/JP2005/006682
(87) International publication number: WO 2005/097691

(57) **Abstract**

A porous structure 12, which is disposed so as to be immersed in molten metal 16 contained in a vessel 14 and is made of a material having no affinity with the molten metal 16, comprises a hollow passage 42 formed therein so as to communicate with an atmospheric environment, wherein a gas, which is produced on an outer surface of the structure in contact with the molten metal, is directed into the hollow passage 42, whereby the gas is restrained from rising as bubbles on the outer surface of the structure 12.

## Description

### TECHNICAL FIELD

The present invention relates to a structure, a device for manufacturing float glass, a method for restraining bubbles from rising and a method for manufacturing float glass, in particular, relates to a structure, a device for manufacturing float glass, a method for restraining bubbles from rising and a method for manufacturing float glass, which are appropriate to manufacture flat glass as a formed product.

### BACKGROUND ART

A device for manufacturing flat glass by the float process is a device, wherein molten glass is continuously supplied on molten metal, such as molten tin, contained in a vessel, the supplied molten glass is caused to float and move forward on the molten tin, and a glass ribbon comprising the molten glass, which has achieved the equilibrium thickness or is about to achieve the equilibrium thickness at that time, is pulled toward the outlet of the molten tin bath, i.e., a lehr (downstream annealing zone) disposed adjacent the outlet of the molten tin bath to manufacture flat glass having a constant width. In such a device for manufacturing flat glass by the float process, the molten glass ribbon, which has achieved the equilibrium thickness or is about to achieve the equilibrium thickness on the molten tin, not only is pulled downstream but also has upper sides of both edge portions stretched in the width direction thereof over a certain length by rotating top rollers on an upstream side in the molten tin, with the result with flat glass is manufactured to have a smaller thickness than the equilibrium thickness.

The device for manufacturing flat glass by use of such top rollers has a problem in that undulations are caused on a glass surface during the stretching operation by the top rollers. From this point of view, there has been proposed a device for holding both edges to manufacture flat glass without using such top rollers and without contact with both edges, and wherein the bath level of the molten tin in the vicinity of both edges of a molten glass ribbon in its width direction is set to be lower than the bath level of the molten tin around both edges to prevent the molten glass ribbon from narrowing in the width direction (e.g., Patent Document 1).

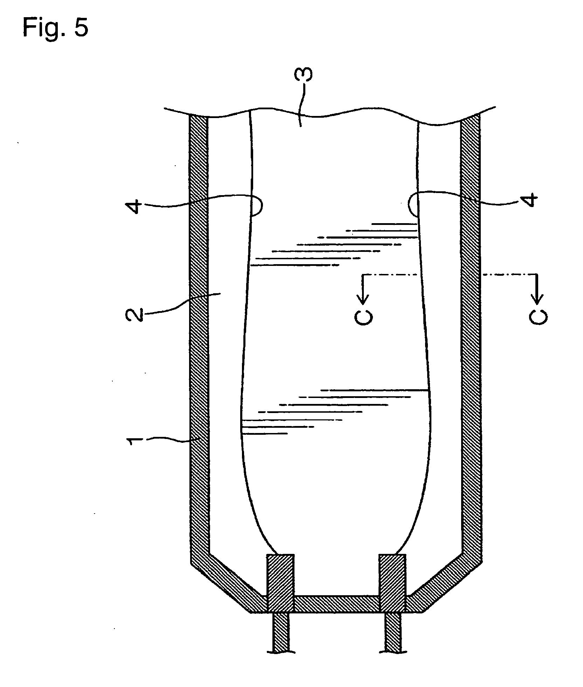

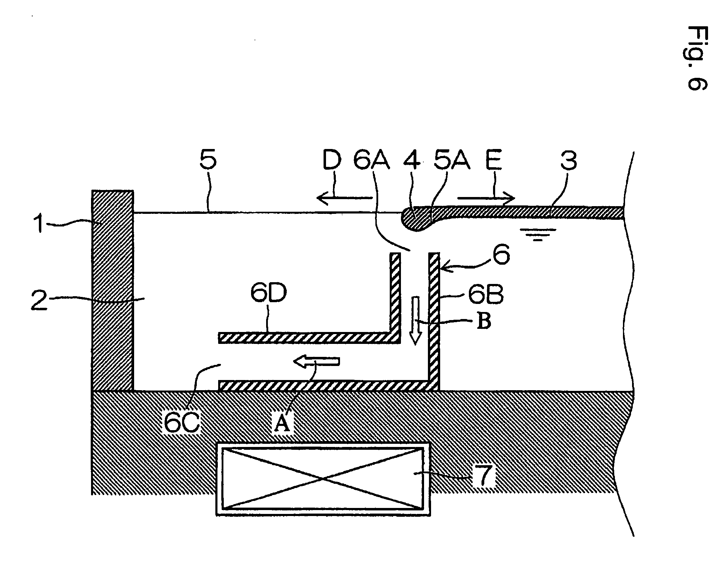

In Fig. 5 and Fig. 6 is shown a conventional example of the device for manufacturing flat glass, which holds both edges without contact with both edges.

In the plan view shown in Fig. 5, a molten glass ribbon 3 is flowing on molten tin 2 contained in a vessel 1, being pulled toward a lehr (in the direction indicated by reference X in Fig. 5). The molten glass ribbon 3 is about to achieve the equilibrium thickness by having both edges 4 and 4 narrowed or spread in the width direction of the molten glass ribbon 3 in a high temperature zone of the molten tin bath. The edge holding operation will be described about a case where the edges 4 of the molten glass ribbon 3 are narrowing in the width direction.

Fig. 6 is a cross-sectional view taken along line C-C of Fig. 5 and shows that a gutter-like body 6 as a structure having an L-character sectional shape is disposed in the molten tin 2 in the vessel 1, being disposed along each of the edges of the molten glass ribbon. The gutter-like body 6 comprises a vertical duct 6B having an upper opening 6A, and a lateral duct 6D having a lower opening 6C. The vessel 1 has a linear motor 7 disposed under the lateral duct 6D of the gutter-like body 6 in a bottom portion thereof, so that the linear motor 7 applies a driving force (magnetic field) to the molten tin 2 in the gutter-like body 6 to flow the molten tin 2 in the direction indicated by an arrow A. Thus, the molten tin 2 in the gutter-like body is caused to flow in a direction indicated by an arrow B, substantially vertical to a bath surface 5 and toward the bottom of the vessel 1, with the result that a negative pressure is created under the corresponding edge 4 of the molten glass ribbon 3 to lower a portion of the bath surface level of the molten tin 2 in the vicinity of the corresponding edge 4 in comparison with the other portions of the bath surface level of the molten tin around the corresponding edge. The corresponding edge 4 of the molten glass ribbon 3 flows into a recessed portion 5A defined by the lowered portion of the bath surface 5. As a result, each of the edges is formed in such an invert convex shape that the thickness of each of the edges 4 is made greater than that of a central portion of the molten glass ribbon 3. Since the presence of the thickness deviation of each of the edges 4 avoids the generation of a force indicated by an arrow E, which causes the molten glass ribbon 3 to narrow in the width direction thereof based on surface tension, each of the edges 4 of the molten glass ribbon 3 can be held by each of the recessed portions 5A, with the result that flat glass is manufactured so as to have a smaller thickness than the equilibrium thickness

The material for the gutter-like bodies 6, which are immersed in the molten tin 2 in the vessel 1 and are formed as a structure having an L-character sectional shape, is required to be less-reactive or unreactive to the molten tin 2, resistant to high temperatures in a high temperature zone and excellent at machinability in terms of forming the gutter-like bodies 6, as well as to be nonmagnetic when the linear motors 7 apply a driving force to the molten tin 2. As the material that satisfies these requirements, graphite is preferred.
Patent Document 1: JP-A-10-236832

### DISCLOSURE OF INVENTION

### PROBLEMS THAT THE INVENTION IS TO SOLVE

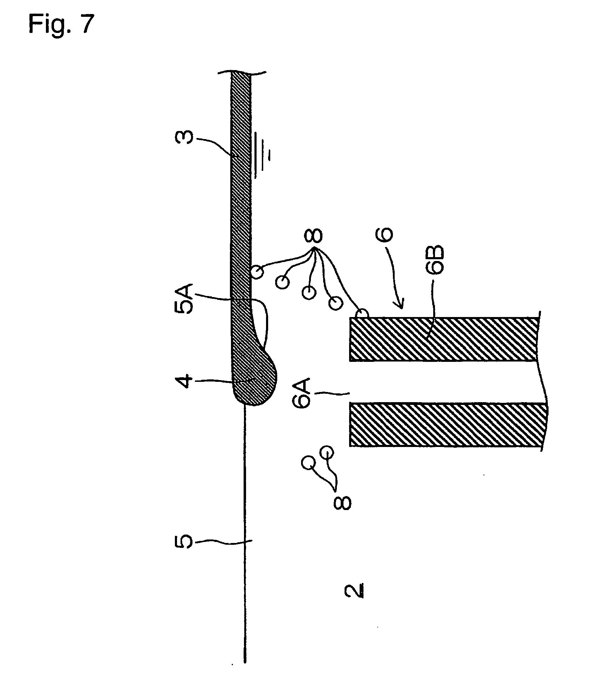

However, in a case where the gutter-like bodies 6 made of graphite are immersed in the molten tin 2, when the molten tin 2 has a temperature of about 900°C or above, a slight amount of substance, such as oxygen or hydrogen, dissolved in the molten tin 2 reacts with the graphite to unfavorably produce a gas as shown in Fig. 7. Although the produced gas adheres, as small bubbles 8, on the surfaces of the gutter-like bodies 6 at first, the bubbles gradually get larger to have larger buoyancy, getting away and rising from the gutter-like bodies 6. It is likely that such rising bubbles 8 cause problems in that the molten glass ribbon 3 is disturbed, that blisters are formed on a lower surface of the molten glass ribbon 3, and undulations are caused on the molten glass ribbon, for example. In particular, these problems have significant adverse effects on flat glass for a FPD, such as a liquid crystal display, which comprises a thin sheet having a thickness of about 0.7 mm and required to have a flatness.

These problems are applied not only to manufacturing of flat glass by the float process but also to manufacturing of, e.g., a metal sheet or other sheet materials. These problems should be solved in all cases where a produced gas rises as bubbles 8 to cause trouble.

The present invention is proposed in consideration of the above-mentioned circumstances. It is an object of the present invention to provide a structure, a device for manufacturing float glass, a method for restraining bubbles from rising and a method for manufacturing float glass, which are capable of preventing bubbles from damaging a product to be formed on molten metal since, even if a structure, which is disposed so as to be immersed in the molten metal contained in a vessel, reacts with, e.g., a gas resolved in the molten metal to produce a gas, the produced gas is restrained from rising as bubbles in the molten metal.

### MEANS FOR SOLVING THE PROBLEM

In order to solve the above-mentioned object, the present invention provides a porous structure, which is disposed so as to be immersed in molten metal contained in a vessel and is made of a material having no affinity with the molten metal (unreactive or less-reactive to the molten metal), comprising a hollow passage formed therein so as to communicate with an atmospheric environment (such as the float bath in float glass manufacturing equipment, which is also applicable to description made later).

According to the above-mentioned structure, a gas, which is produced on an outer surface of the structure in contact with the molten metal, is discharged into the atmospheric environment through the hollow passage since the hollow passage is formed in the structure so as to communicate with the atmospheric environment. Thus, the gas, which is produced on the outer surface of the structure, can be restrained from rising as bubbles, with the result that the bubbles are prevented from causing undulations on a product to be formed on the molten metal.

It is supposed that the produced gas is discharged into the atmospheric environment through the hollow passage by the following mechanism. The hollow passage, which is formed in the structure so as to communicate with the atmospheric environment, is substantially at atmospheric pressure therein while a larger pressure than atmospheric pressure is applied in the molten metal where the gas is produced. Accordingly, the difference between the pressure in the hollow passage and the pressure in the molten metal causes the gas in the bubbles to pass through the porous structure and move into the hollow passage, being discharged into the atmospheric environment through the hollow passage before the bubbles, which have adhered on the surfaces of the structure, get away from the structure and rises in the molten metal.

The atmospheric environment referred to in Description means a space under atmospheric pressure, irrespectively of what gas component is contained in the space.

In a preferred embodiment of the present invention, it is characterized in that the porous structure has a porosity of 5 to 40%. The reason is that when the porous structure has a porosity of less than 5%, the produced gas is unlikely to pass through the structure and move into the hollow passage, with the result that the produced gas fails to be sufficiently restrained from rising as bubbles. The other reason is that when the porous structure has a porosity of higher than 40%, the molten metal is likely to come into the structure since the structure decreases in strength. The porosity more preferably ranges from 20% to 30%.

In a preferred embodiment of the present invention, it is characterized in that the structure has a wall thickness between an outer surface thereof and the hollow passage, the wall thickness ranging from 1 to 100 mm. The reason is that when the wall thickness between the outer surface of the structure and the hollow passage is greater than 100 mm, the produced gas is unlikely to pass through the structure and move into the hollow passage, with the result that the produced gas fails to be sufficiently restrained from rising as bubbles. The other reason is that when the wall thickness is smaller than 1 mm, it is impossible to ensure the strength required for the structure. In this case, the wall thickness between the outer surface of the structure and the hollow passage means the thickness represented by the distance between the outer surface of the structure and the hollow passage.

In a preferred embodiment of the present invention, it is characterized in that the structure is made of graphite. Since the structure is made of graphite, the structure is less-reactive or unreactive to the molten metal, resistant to high temperatures in a high temperature zone and excellent at machinability.

In a preferred embodiment of the present invention, it is characterized in that the structure has a communication port (a portion projecting into the atmosphere) formed therein so as to communicate with the atmospheric environment, the communication port being protected from oxygen in the atmospheric environment by an oxidation resistant member made of a material, which is more difficult to be oxidized than the structure. The reason is that it is likely that when the communication port, which communicates with the atmospheric environment of the structure, constantly has contact with oxygen in the atmospheric environment, the structure is oxidized and eroded at the communication port, and the communication port sinks in the molten metal in a long period of time, and that when the communication port has sunk, the hollow portion fails to communicate with the atmospheric environment, and the produced gas is unlikely to pass through the structure and move into the hollow passage, with the result that the produced gas cannot be prevented from rising as bubbles. As the material for the oxidation resistant member, it is possible to appropriately use brick or a ceramic material, such as silicon carbide (SiC), silicon nitride (SiN) or a composite material thereof.

In a preferred embodiment of the present invention, a device for manufacturing float glass, wherein a molten glass ribbon is formed by continuously supplying molten glass on a molten metal surface of a molten metal bath comprising contained molten metal, and the glass ribbon is caused to float and move forward on the molten metal surface to manufacture flat glass, is characterized in that the above-mentioned porous structure is disposed so as to be immersed in the molten metal in order to solve the above-mentioned object.

In other words, the device for manufacturing float glass is constructed by using the above-mentioned structure, which has the hollow passage formed therein so as to communicate with the atmospheric environment. By this arrangement, the produced gas can be restrained from rising as bubbles. As a result, the rising bubbles can be prevented from damaging the molten glass ribbon, which is formed on the molten metal. Thus, the bubbles can be restrained from causing undulations on the flat glass to be formed, with the result that it is possible to manufacture the flat glass so as to have an excellent surface flatness and an excellent thickness stability.

In a preferred embodiment of the present invention, it is characterized in that the structure comprises gutter-like bodies, which hold both edges of the molten glass ribbon without contact with both edges, the molten glass ribbon being supplied on the bath surface of the molten metal. The gutter-like bodies suck the molten metal in a substantially vertical direction along both edges of the molten glass ribbon to form recessed portions on the bath surface, causing both edges to flow into and be held by the recessed portions without contact with the gutter-like bodies. When a contact type holding means, such as a holding means comprising top rollers, is used, the flatness of the flat glass is damaged when both edges of the molten glass ribbon are held. From this point of view, it is preferred to use the above-mentioned gutter-like bodies as a non-contact type holding means. Although the gutter-like bodies are frequently made of graphite from the viewpoint of non-reactivity with respect to the molten metal, resistance to high temperatures, easy machinability, non-magnetism and the like for fabrication of the gutter-like bodies, the graphite reacts with a gas dissolved in the molten metal, such as oxygen or hydrogen, to produce a gas as stated above. In a case where the structure comprises such gutter-like bodies, when the above-mentioned bubbles (gas) rises, the bubbles frequently collide with the molten glass ribbon since the gutter-like bodies are located in the vicinity of the portions just under both edges of the molten glass ribbon. The effect of the present invention is particularly effectively exhibited when such gutter-like bodies are used. Thus, the bubbles can be restrained from causing undulations on the flat glass to be formed, with the result that the flat glass can be manufactured so as to have an excellent surface flatness and an excellent thickness stability.

The present invention also provides a method for restraining bubbles from rising, comprising providing a porous structure disposed so as to be immersed in molten metal contained in a vessel, the structure being made of a material having no affinity with the molten metal; forming a hollow passage in the structure so as to communicate with an atmospheric environment; and directing a gas into the hollow passage, the gas being produced on an outer surface of the structure in contact with the molten metal, whereby the gas is restrained from rising as bubbles on the outer surface of the structure. The structure may comprise the above-mentioned structure.

The present invention also provides a method for manufacturing float glass, comprising manufacturing flat glass by using the device for manufacturing float glass wherein the above-mentioned porous structure is disposed so as to be immersed in the molten metal.

In order to solve the above-mentioned object, the present invention provides a method for manufacturing float glass, wherein a molten glass ribbon is formed by continuously supplying molten glass on a molten metal surface of a molten metal bath comprising contained molten metal, and the glass ribbon is caused to float and move forward on the molten metal surface to manufacture flat glass having a target thickness, and wherein the molten metal is substantially vertically sucked along both edges of the molten glass ribbon to form recessed portions on the molten metal surface, and the molten glass ribbon is formed into flat glass with the edges being flowed into and held by the recessed portions; comprising providing a porous structure disposed so as to be immersed in the molten metal in order to form the recessed portions, the structure being made of a material having no affinity with the molten metal; directing a gas into a hollow passage formed in the structure, the gas being produced on an outer surface of the structure in contact with the molten metal; and manufacturing the flat glass while the gas is restrained from rising as bubbles on the outer surface of the structure.

In accordance with the present invention, the molten glass ribbon is formed by continuously supplying the molten glass on the molten metal surface of the molten metal bath comprising contained molten metal, and the molten metal is substantially vertically sucked along both edges of the molten glass ribbon to form the recessed portions on the molten metal bath surface, with the result that the molten glass ribbon is formed into flat glass with the edges being flowed into and held by the recessed portions. Although the porous structure, which is made of a material having no affinity with the molten metal, is disposed so as to be immersed in the molten metal in order to form the recessed portions, a gas is produced on an outer surface of the structure in contact with the molten metal. The produced gas is directed into the hollow passage formed in the structure in order to manufacture the flat glass while the produced gas is restrained from rising as bubbles on the outer surface of the structure. Thus, the produced gas is prevented from rising as bubbles and colliding with the molten glass ribbon, with the result that no trouble is caused on the molten glass ribbon.

### EFFECT OF THE INVENTION

In accordance with the structure, the method for manufacturing float glass, the method for restraining bubbles from rising and the method for manufacturing float glass of the present invention, even if the structure, which is disposed so as to be immersed in molten metal, in particular molten tin, contained in a vessel, reacts with a gas dissolved in the molten metal to produce a gas, it is possible to restrain the gas from rising as bubbles. Thus, it is possible to prevent the bubbles from damaging a formed produced to be formed on the molten metal.

It is possible to manufacture flat glass having an excellent surface flatness and an excellent thickness stability by applying the present invention to manufacturing of flat glass by the float process.

### BRIEF DESCRIPTION OF DRAWINGS

Fig. 1 is a plan view showing the device for manufacturing, as a formed product, flat glass for a FPD, such as a liquid crystal display, according to an embodiment of the present invention;
Fig. 2 is a cross-sectional view of a gutter-like body taken along line F-F of Fig. 1;
Fig. 3 is a cross-sectional view of the gutter-like body taken along line K-K of Fig. 1;
Fig. 4 is a schematic view explaining the mechanism, by which hollow passages, which are formed in the gutter-like body, restrains bubbles from rising;
Fig. 5 is a plan view of a conventional device for manufacturing flat glass;
Fig. 6 is a cross-sectional view taken along line C-C of Fig. 5; and
Fig. 7 is a schematic view explaining trouble on flat glass, which is caused when the graphite of the gutter-like body reacts oxygen dissolved in molten tin to produce a gas, and when the produced gas rises as bubbles.

### EXPLANATION OF THE REFERENCE NUMERALS

10: device for manufacturing float glass, 12: gutter-like body, 12A: projection, 14: vessel, 16: molten tin, 18: supply port, 20: molten glass ribbon, 22: edge, 24: bath surface, 26: recessed portion, 28: upper opening, 30: vertical duct, 32: lower opening, 34: lateral duct, 40: linear motor, 42: hollow passage, 42A: vertical hollow passage 42B: lateral hollow passage, 42C: orthogonal hollow passage, 44: oxidation resistant cap, 46: bubble

### BEST MODE FOR CARRYING OUT THE INVENTION

The structure, the device for manufacturing float glass, the method for restraining bubbles from rising and the method for manufacturing float glass, according to a preferred embodiment of the present invention will be described in detail in reference to the accompanying drawings.

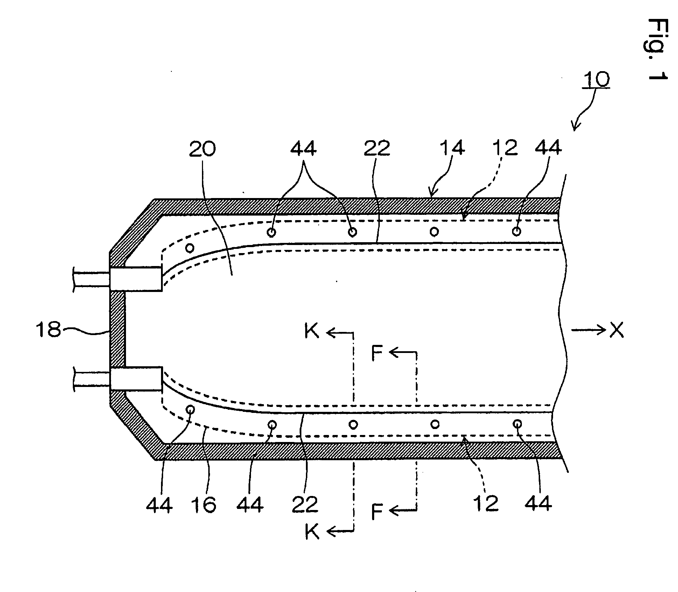

Fig. 1 is a plan view of a float glass manufacturing device 10. The flat glass for a FPD, such as a liquid crystal display, is generally required to have a thickness of about 0.7 mm and is also required to have a flatness with a high degree of accuracy. Such a float glass manufacturing device 10 preferably comprises a flat glass manufacturing device, which utilizes gutter-like bodies 12 to hold edges 22 without contact with the edges. In accordance with the float glass manufacturing device 10 thus constructed, it is possible to manufacture flat glass, which satisfies the thickness and the flatness required as flat glass for a FPD.

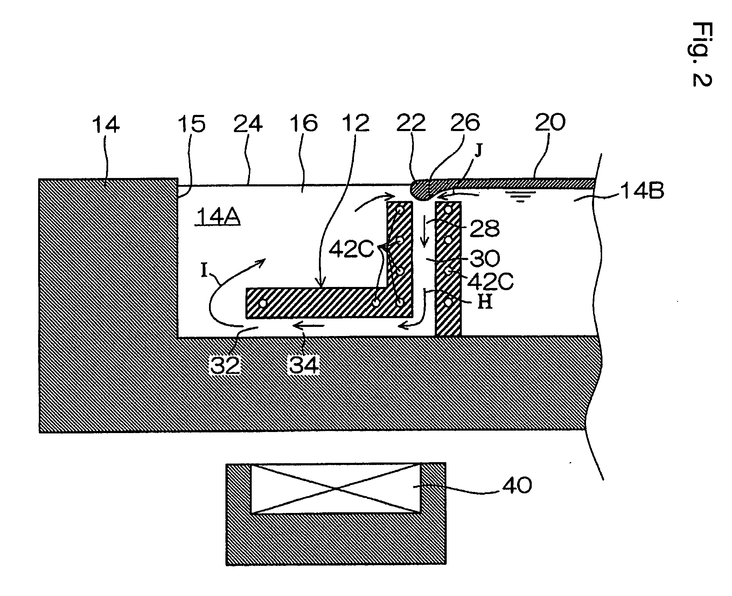

The gutter-like bodies 12 (structure) of the float glass manufacturing device 10 are disposed under a molten glass ribbon 20 in a vessel 14 shown in Fig. 2, are disposed so as to be immersed molten tin (molten metal) 16 contained in the vessel 14 and are also disposed along both edges 22 and 22 of the molten glass ribbon 20, which is continuously supplied from a glass melting furnace into a supply port 18 of the vessel 14 shown in Fig. 1. The molten glass ribbon 20 moves on the surface of the molten tin, being pulled toward a lehr as the direction indicated by reference X in Fig. 1. Both edges 22 and 22 are held by recessed portions 26 of a bath surface 24 (Fig. 2) in a high temperature zone (having a temperature of about 930 to 1,300°C for soda lime glass) and a forming zone (having a temperature of about 800 to about 930°C for soda lime glass) of the molten glass ribbon 20. The molten glass ribbon 20, which has both edges 22 held by the recessed portions 26, is subjected to thickness and width adjustment during the forward movement toward the direction X, and then is forwarded, in a stable way, to a later stage in the vessel to be cooled before being taking out of the vessel 14 to be forwarded to the lehr. The glass in this embodiment comprises soda lime glass, and the molten tin 16 in the high temperature zone is heated by an electric heater. The vessel 14 is built of refractory bricks.

Fig. 2 is a cross-sectional view taken along line F-F of Fig. 1. As shown in these figures, each of the gutter-like bodies 12 is formed in a substantially L-character sectional shape and comprises a vertical duct 30 having an upper opening 28, and a lateral duct 34 having a lower opening 32. A linear motor 40 is disposed below a bottom portion of the vessel 14 under the lateral duct 34 of each of the gutter-like bodies 12. The linear motor 40 applies a driving force to the molten tin 16 in the lateral duct 34, causing the molten tin 16 to flow in the vertical duct 30 and the lateral duct 34 of each of the gutter-like bodies 12 in a direction indicated by an arrow H. By this operation, a flow of the molten tin 16 is generated in a direction substantially perpendicular to the bath surface 24 and toward the bottom of the vessel 14 to create a negative pressure under each of the edges 22 of the molten glass ribbon 20. By this negative pressure, the bath surface level of the molten tin 16 in the vicinity of each of the edges 22 is made lower than the bath surface level around each of the edges. Both edges 22 of the molten glass ribbon 20 flow into the recessed portions 26 defined by the lowered portions of the bath surface 24. In this way, both edges 22 of the molten glass ribbon 20 are held by the recessed portions 26. Accordingly, it is possible to increase the width of the molten glass ribbon (prevent the molten glass ribbon from narrowing in its width direction) and to keep the width wide, which is capable of manufacturing flat glass having a smaller thickness than the equilibrium thickness.

The linear motor 40 is advantageous in that it is possible to directly drive the molten tin 16 and that it is easy to control the flow rate of the molten tin. The linear motor 40 has coils wound on a comb-like primary iron core, and a three-phase a.c. voltage is applied to the coils to successively excite the coil, generating a magnetic field traveling in a certain direction. Each linear motor 40 is disposed below the bottom of the vessel 14 with the gutter-like bodies 12 disposed therein, such that each linear motor can apply a driving force (tractive force) to the molten tin 16 in the lateral duct 34 of each of the gutter-like bodies 12. By this arrangement, the molten tin 16 in the vertical duct 30 and the lateral duct 34 of each of the gutter-like bodies is flowed toward the closest lateral wall 15 of the vessel 14 from just under the corresponding edge 22 of the molten glass ribbon 20 as indicated by the arrow H and is caused to change its flow direction as indicated by an arrow I by the driving force of each of the linear motors 40. A portion of the molten tin 16 close to each vessel end portion 14A and a portion of the molten tin 16 in a vessel central portion 14B are directed toward each of the upper openings 28 and are sucked into each of the upper openings 28 by the suction force, which is generated at the upper opening 28 of each of the vertical ducts 30. By this operation, the recessed portions 26 are formed in a stable way on the bath surface 24 to make the shape of the edges 22 stable, with the result that the edges are stably held by the recessed portions 26.

The material for forming the gutter-like bodies 12 is required to be less-reactive or unreactive to the molten tin 16, resistance to high temperatures in the high temperature zone, excellent at machinability in terms of forming the gutter-like bodies 6, and nonmagnetic because of the linear motors 40 applying a magnetic field to the gutter-like bodies 12. It is usual to use graphite as the material that satisfies these requirements.

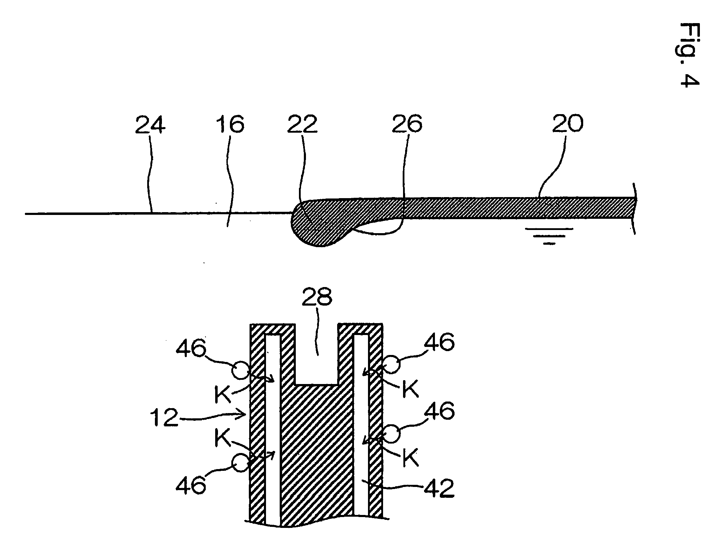

However, in a case where the gutter-like bodies 12 made of graphite are immersed in the molten tin 16 with a slight amount of gas dissolved therein, when the molten tin 16 has a temperature of about 900°C or above, such a slight amount of gas, such as oxygen or hydrogen, dissolved in the molten tin 16 reacts with the graphite to unfavorably produce a gas. Although the produced gas adheres, as small bubbles 46 (see Fig. 4), on the outer surfaces of the gutter-like bodies 12 at first, the bubbles gradually get larger to have larger buoyancy, getting away and rising from the outer surfaces of the gutter-like bodies 12. When such rising bubbled 46 arrive at a lower surface of the molten glass ribbon 20, it is likely that the rising bubbles causes several problems, such as formation of blisters on the lower surface of the molten glass ribbon and formation of undulation, with the result that flat glass is formed, being defective.

From this point of view, in the present invention, each of the gutter-like bodies 12, which are disposed so as to be immersed in the molten tin 16 contained in the vessel 14 and are made of porous graphite having a porosity of 5 to 40%, has hollow passages 42 (42A, 42B and 42C) formed therein so as to communicate with the atmospheric environment, with the result that the produced gas is restrained from rising as bubbles 46 by the hollow passages 42.

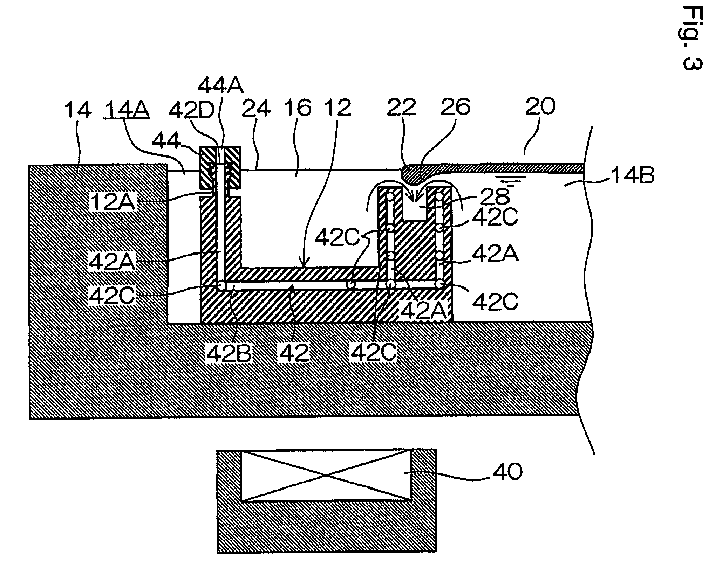

Fig. 3 is a cross-sectional view taken along line K-K of Fig. 1. The plural hollow passages 42 are formed in portions of the gutter-like bodies 12 so that the hollow passages do not overlap with the vertical ducts 30 and the lateral ducts 32.

As shown in Fig. 3, each of the hollow passages 42 is formed so as to include vertical hollow passages 42A extending in a vertical direction, a lateral hollow passage 42B extending in a lateral direction, and orthogonal hollow passages 42C extending a direction orthogonal to the plane containing the vertical hollow passages 42A and the lateral hollow passage 42B (in the front and back directions of the sheet showing Fig. 3) in each of the gutter-like bodies 12. It should be noted that the orthogonal hollow passages 42C are formed in portions of the gutter-like bodies 12 under both edges 22 of the molten glass ribbon 20. The reason is that when the above-mentioned reacted gas rises as bubbles under both edges 22 of the molten glass ribbon 20, the bubbles frequently collide with the lower surface of flat glass to be formed. The gutter-like bodies 12 have projections 12A formed at portions thereof remote from the edges 22 so as to project from the bath surface 24 of the molten tin 16. Each of the projections 12A has a communication port 42D formed therein so as to communicate the relevant hollow passage 42 with the atmospheric environment. Thus, the gutter-like bodies 12 are formed as a structure having a function of restraining bubbles from rising.

By forming the hollow passages 42 in the gutter-like bodies as stated above, the gas that is produced because oxygen or hydrogen dissolved in the molten tin 16 reacts with the graphite forming the gutter-like bodies 12 can be prevented from rising as the bubbles 46 in the molten tin (see Fig. 4). Accordingly, it is possible to prevent the bubbles 46 from damaging the flat glass to be formed on the molten tin 16.

It is supposed that the produced gas is discharged into the atmospheric environment through the hollow passages 42 by the following mechanism. The gutter-like bodies 12, which are made of graphite, are porous. The hollow passages 42 are substantially at atmospheric pressure therein since the hollow passages 42 are formed in the gutter-like bodies 12 so as to communicate with the atmospheric environment. On the other hand, a larger pressure than atmospheric pressure is applied to the bubbles 46 originating from the produced gas since the weight of the molten tin 16 is added to atmospheric pressure, by a depth corresponding to a place where the gas is produced, in the molten tin 16 where the gas is produced. It is supposed that the difference between the pressure in the hollow passages 42 and the pressure in the molten tin 16 causes the gas in the bubbles 46 to pass through the porous gutter-like bodies 12 and move into the hollow passages 42 as indicated by arrows K in Fig. 4 before the bubbles 46,_which have adhered on the surfaces of the gutter-like bodies 12, get away from the surfaces of the gutter-like bodies 12 and rise in the molten tin, and that the gas is then discharged from the communication ports 42D into the atmospheric environment above the bath surface 24 through the hollow passages 42 shown in Fig. 4. In this case, it is preferred that the gutter-like bodies 12, which are made of graphite, have a porosity of 5 to 40%. The reason is that when the gutter-like bodies 12 have a porosity of less than 5%, the gas in the bubbles is unlikely to pass through the gutter-like bodies 12 and move into the hollow passages 42, with the result that the produced gas fails to be sufficiently restrained from rising as bubbles. The other reason is that when the gutter-like bodies 12 have a porosity of higher than 40%, the molten tin is likely to come into the gutter-like bodies 12 since the gutter-like bodies 12 decrease in strength. The porosity more preferably ranges from 20% to 30%. The wall thickness between the outer surface and a hollow passage 42 in each of the gutter-like bodies 12 preferably ranges from 1 to 100 mm, more preferably ranges from 1.5 to 50 mm and most preferably ranges from 2 to 30 mm. The reason is that when the wall thickness between the outer surface and a hollow passage 42 in each of the gutter-like bodies 12 is greater than 100 mm, the gas in the bubbles 8 is unlikely to pass through the gutter-like bodies 12 and move into the hollow passages 42, with the result that the produced gas fails to be sufficiently restrained from rising as bubbles. The other reason is that when the wall thickness is smaller than 1 mm, it is impossible to ensure the strength required for the gutter-kike bodies 12. In this case, the wall thickness between the outer surface and a hollow passage in each of the gutter-like bodies 12 means the thickness represented by the distance between the outer surface and a hollow passage in each of the gutter-like bodies.

Although not shown in Fig. 3, a suction means may be coupled to each of the communication ports 42D to create a negative pressure in each of the hollow passages 24, so that the pressure difference between the inside of the hollow passages 42 and the inside of the molten tin 16 is positively made larger. There is no limitation to the cross-sectional shape of the hollow passages 42. The hollow passages may be formed in any cross-sectional shape.

When a tin oxide, which is produced by the oxidation of a portion of the molten tin 16 forming the bath surface 24, adheres to flat glass, the adhering tin oxide is one of the factors to make the flat glass defective. From this point of view, it is preferred that an ambient atmosphere, which comprises a mixed gas of nitrogen and hydrogen without containing oxygen therein, be formed in the atmospheric environment above the bath surface 24. However, a slight amount of oxygen remains in the mixed gas and comes into the atmospheric environment from outside even in such a case. Accordingly, the graphite of the projections 12A, where the communication ports 42D are formed, is oxidized and eroded, and the projections 12A sink into the molten tin 16 in a long period of time. When the projections 12A have sunk into the molten tin 16, the molten tin seals the communication ports to prevent the hollow passages 42 from communicating with the atmospheric environment. Accordingly, the produced gas is prevented from passing through the gutter-like bodies 12 and moving into the hollow passages 42, with the result that it is impossible to restrain the produced gas from rising as bubbles. Although the atmospheric environment generally refers to a space comprising an air layer, the atmospheric environment used in Description means a space under atmospheric pressure irrespective of what glass component is contained in the atmospheric environment.

From this point of view, in the present invention, each of the projections 12A of the gutter-like bodies 12 is protected from oxygen by an oxidation resistant cap 44, which is made of a material that is more difficult to be oxidized than graphite. The oxidation resistant cap 44 is put on each of the projections 12A of the gutter-like bodies 12. Fig. 1 shows plural oxidation resistant caps 44, which are exposed to the atmospheric environment from the bath surface 24 of the molten tin 16.

As the material for the oxidation resistant caps 44, e.g., brick or a ceramic material, in particular, silicon carbide (SiC) or silicon nitride (SiN) can be appropriately used. The oxidation resistant caps 44 have lower portions formed in, e.g., a concave shape and upper portions formed with through holes 44A, by which the communication ports 42D formed in the projections 12A of the gutter-like bodies 12 communicate with the atmospheric environment. Each of the oxidation resistant caps 44 has an inner peripheral surface internally threaded so as to be engaged with an externally threaded outer peripheral surface of the relevant projection 12A. Thus, the projections 12A, which project from the bath surface 24, are protected from oxygen by the oxygen resistant caps 44, with the result that it is possible to prevent the projections 12A from being eroded by oxygen remaining in the mixed gas. The coupling between an oxidation resistant cap 44 and the relevant projection 12A is not limited to threaded coupling. Any means may be adopted as long as both members can be coupled without a gap or the like being formed in the coupling.

Although the preferred embodiment of the present invention has been described about a case where the device for manufacturing a formed product comprises the device for manufacturing flat glass by the float process, the present invention is not limited to the device for manufacturing flat glass. The present invention is applicable to all cases, where a structure, which is disposed so as to be immersed in molten tin contained in a vessel, comprises a porous structure, which is made of a material that reacts with a gas dissolved in the molten tin, producing a gas, and where the produced gas rises as bubbles to cause trouble.

### INDUSTRIAL APPLICABILITY

The present invention is applicable to manufacturing of thin float glass having undulations minimized and having a high degree of flatness.

The entire disclosure of Japanese Patent Application No. 2004-113542 (filed on April 7, 2004) including specification, claims, drawings and summary is incorporated herein by reference in its entirety.

## Claims

1. A porous structure, which is disposed so as to be immersed in molten metal contained in a vessel and is made of a material having no affinity with the molten metal, comprising a hollow passage formed therein so as to communicate with an atmospheric environment.

2. The structure according to Claim 1, wherein the porous structure has a porosity of 5 to 40%.

3. The structure according to Claim 1 or 2, wherein the structure has a wall thickness between an outer surface thereof and the hollow passage, the wall thickness ranging from 1 to 100 mm.

4. The structure according to any one of Claims 1 to 3, wherein the structure is made of graphite.

5. The structure according to any one of Claims 1 to 4, wherein the structure has a communication port formed therein so as to communicate with the atmospheric environment, the communication port being protected from oxygen in the atmospheric environment by an oxidation resistant member made of a material, which is more difficult to be oxidized than the structure.

6. A device for manufacturing float glass, wherein a molten glass ribbon is formed by continuously supplying molten glass on a molten metal surface of a molten metal bath comprising contained molten metal, and the glass ribbon is caused to float and move forward on the molten metal surface to manufacture flat glass, comprising a porous structure disposed so as to be immersed in the molten metal, the structure comprising one defined in any one of Claims 1 to 5.

7. The device for manufacturing float glass according to Claim 6, further comprising gutter-like bodies, which hold both edges of the molten glass ribbon without contact with both edges.

8. A method for restraining bubbles from rising, comprising providing a porous structure disposed so as to be immersed in molten metal contained in a vessel, the structure being made of a material having no affinity with the molten metal; forming a hollow passage in the structure so as to communicate with an atmospheric environment; and directing a gas into the hollow passage, the gas being produced on an outer surface of the structure in contact with the molten metal, whereby the gas is restrained from rising as bubbles on the outer surface of the structure.

9. The method for restraining bubbles from rising according to Claim 8, wherein the structure comprises one defined in any one of Claims 2, 3, 4 and 5.

10. A method for manufacturing float glass, comprising using the device for manufacturing float glass, defined in Claim 6, to manufacture flat glass.

11. A method for manufacturing float glass, wherein a molten glass ribbon is formed by continuously supplying molten glass on a molten metal surface of a molten metal bath comprising contained molten metal, and the glass ribbon is caused to float and move forward on the molten metal surface to manufacture flat glass having a target thickness, and wherein the molten metal is substantially vertically sucked along both edges of the molten glass ribbon to form recessed portions on the molten metal surface, and the molten glass ribbon is formed into flat glass
with the edges being flowed into and held in the recessed portions;
comprising providing a porous structure disposed so as to be immersed in the molten metal in order to form the recessed portions, the structure being made of a material having no affinity with the molten metal; directing a gas into a hollow passage formed in the structure, the gas being produced on an outer surface of the structure in contact with the molten metal; and manufacturing the flat glass while the gas is restrained from rising as bubbles on the outer surface of the structure.
